# EUROPÄISCHE PATENTSCHRIFT

(11) **EP 3 376 107 B1**
(45) Veröffentlichungstag und Bekanntmachung des Hinweises auf die Patenterteilung: **23.09.2020**
(21) Anmeldenummer: 18161238.3
(22) Anmeldetag: 12.03.2018
(51) Int. Cl.: F23J 15/06, F23B 30/00, F23B 80/00

(54) **BIOMASSEOFEN**
BIOMASS FURNACE
FOUR À BIOMASSE

(30) Priorität: 13.03.2017 DE 202017001364 U
(43) Veröffentlichungstag der Anmeldung: 19.09.2018
(73) Patentinhaber: Riener, Karl Stefan, 4560 Kirchdorf (AT)
(72) Erfinder: Riener, Karl Stefan, 4560 Kirchdorf (AT)
(74) Vertreter: Samson & Partner Patentanwälte mbB

(56) Entgegenhaltungen:
- EP-A1- 3 081 860
- EP-B1- 1 283 972
- DE-U1-202015 101 099
- US-A- 5 873 356

## Beschreibung

### GEBIET DER ERFINDUNG

Die vorliegende Erfindung bezieht sich allgemein auf einen Biomasseofen.

### HINTERGRUND DER ERFINDUNG

Es sind Biomasseöfen zum Heizen bekannt, die als Brennstoff Biomasse verwenden. Brennstoffe können zum Beispiel Scheitholz, Hackschnitzelgut, Pellets und dergleichen sein. Andere Fest-Brennstoffe können ebenfalls geeignet sein. Solche Öfen werden typischerweise auch in Wohnräumen, zum Beispiel in der Form eines Kaminofens oder eines sogenannten Schwedenofens aufgestellt.

Allgemein gibt es das Bestreben, einen hohen Wirkungsgrad für die Wärmegewinnung zu erzielen. Hierzu können die bei der Verbrennung entstehenden heißen Rauchgase über einen Rauchgaskanal in einen Rauchgassammelbereich geleitet werden, bevor sie dem Kamin zugeführt werden, über den sie nach außen abgegeben werden. Vom Rauchgaskanal bzw. vom Rauchgassammelbereich kann über Wärmetauscher eine Nutzung der Wärme der Rauchgase erfolgen. Des Weiteren kann der Schadstoffausstoß verringert werden.

US 5,873,356 A zeigt einen Holzpelletofen mit einem im Wesentlichen quaderförmigen Gehäuse und einem sich verjüngenden Brennraum. Das im Brennraum nach oben steigende Rauchgas wird über einen innerhalb des Brennraums angeordneten Rauchgaskanal nach unten in einen Rauchgassammelbereich geleitet. In einem Zwischenraum zwischen dem Gehäuse und dem schmäleren Brennraumbereich befindet sich ein Luftbefeuchter. EP 1 283 972 B1 zeigt einen Heizwasserkessel für Festbrennstoffe. Der Boiler weist einen im Wesentlichen runden Querschnitt auf, in dem eine runde Brennkammer exzentrisch angeordnet ist. Rauchrohre leiten das Rauchgas durch den breitesten Teil des Wasserreservoirs abwärts.

Es ist eine Aufgabe der vorliegenden Erfindung, einen verbesserten Biomasseofen, insbesondere einen kompakteren Biomasseofen, zur Verfügung zu stellen.

### KURZFASSUNG DER ERFINDUNG

Nach einem ersten Aspekt stellt die vorliegende Erfindung einen Biomasseofen mit zwei Seitenwänden zur Verfügung, der einen Brennraum umfasst. Der Brennraum ist hinten schmäler als vorne. Ein Rauchgassammelbereich ist unterhalb des Brennraums angeordnet. Es gibt mindestens einen Rauchgaskanal zum Leiten von Rauchgas von einem oberen Bereich des Brennraums nach unten in den Rauchgassammelbereich. Der mindestens eine Rauchgaskanal ist zumindest teilweise zwischen einer der Seitenwände und dem Brennraum in dem Bereich angeordnet, in dem der Brennraum schmäler ausgestaltet ist. Weitere Aspekte und Merkmale der vorliegenden Erfindung ergeben sich aus den abhängigen Ansprüchen, veranschaulicht in den beigefügten Zeichnungen und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschrieben, in der:
Fig. 1 ein Ausführungsbeispiel eines Biomasseofens in einer vertikalen Schnittansicht durch den Teil des Brennraums, der schmäler ausgestaltet ist, zeigt; und
Fig. 2a bis 2f verschiedene beispielhafte schematische Draufsichten auf unterschiedliche Ausführungsformen des Biomasseofens, insbesondere der Querschnitte des Brennraums und des mindestens einen Rauchgaskanals zeigen. Ein weiterer, nicht erfindungsgemäßer, Biomasseofen ist in Fig. 2g dargestellt.

### BESCHREIBUNG BEVORZUGTER AUSFÜHRUNGSBEISPIELE

Die Ausführungsbeispiele betreffen einen Biomasseofen. Es kommen alle Arten von festen Brennstoffen in Betracht, die aus Biomasse hergestellt sind, hierzu zählen Pellets, Hackschnitzelgut, Scheitholz usw. In den Ausführungsbeispielen umfasst ein Biomasseofen zwei Seitenwände. Ferner kann der Biomasseofen eine Rückwand und eine Vorderwand oder Vorderfront umfassen. Zusammen bilden diese mit den Seitenwänden eine Außenverkleidung des Biomasseofens. In der Vorderfront kann eine Ofentür vorgesehen sein, die Zugang zu dem Brennraum eröffnet. In Ausführungsformen weist die Ofentür ein Sichtfenster auf, das einen Blick in den Brennraum erlaubt. Der Biomasseofen kann eine obere Abdeckung und einen Boden umfassen.

Die Seitenwände und Rückwand des Biomasseofens können aus verschiedenen Materialien hergestellt sein. Hierzu zählen beispielsweise Metallblech, Gusseisen usw. Die vorliegende Erfindung ist nicht auf eine spezielle Materialausgestaltung der Wände des Biomasseofens eingeschränkt.

In den Ausführungsbeispielen umfasst der Biomasseofen einen Brennraum mit einer Breite in einer Richtung von Seitenwand zu Seitenwand, d.h. von vorn, von der Ofentür aus gesehen. Der Brennraum ist hinten, an der von der Ofentür abgewandten Seite schmäler als vorne. Die Verjüngung des Brennraums hat keinen Einfluss auf die Verbrennungsqualität.

Der erste, vordere Bereich kann eine erste konstante Breite aufweisen und der Brennraum kann sich in einem zweiten, hinteren Bereich kontinuierlich von vorne nach hinten verjüngen. Die Verjüngung kann symmetrisch oder asymmetrisch sein.

In einem anderen Ausführungsbeispiel kann der zweite hintere Bereich eine zweite konstante Breite aufweisen, die kleiner ist als die erste konstante Breite. In einem Ausführungsbeispiel kann der Brennraum eine im Wesentlichen rechteckförmige Grund- bzw. Querschnittsfläche haben, bei der die hinteren zwei Ecken abgeschrägt sind. In anderen Ausführungsformen verjüngt sich der Brennraum kontinuierlich von vorne nach hinten, symmetrisch oder asymmetrisch. Dabei kann die Verjüngung entlang einer gebogenen oder einer geraden Form erfolgen.

In einer weiteren Ausführungsform kann die Grund- bzw. Querschnittsfläche des Brennraums im Wesentlichen rund sein. Eine Verjüngung im hinteren Bereich des Biomasseofens ergibt dann eine in etwa Ei-förmige Grundrissform für den Brennraum.

Die Verjüngung des Brennraums kann asymmetrisch sein. In einer bevorzugten Ausführungsform ist sie symmetrisch, genauer spiegelsymmetrisch zu einer vertikalen von vorn nach hinten in der Mitte des Brennraums angeordneten Ebene.

In den Ausführungsbeispielen umfasst der Biomasseofen einen Rauchgassammelbereich, der unterhalb des Brennraums angeordnet ist. Der Rauchgassammelbereich kann als Rohrabschnitt, als Kammer oder dergleichen ausgeführt sein. Der Rauchgassammelbereich kann im Wesentlichen den gesamten Querschnitt des Brennraums ausfüllen aber auch eine kleinere oder größere Querschnittsfläche als der Brennraum aufweisen.

In Ausführungsformen weist der Rauchgassammelbereich einen Kaminanschluss auf, der einen Anschluss des Rauchgassammelbereichs an einen Kamin ermöglicht. In anderen Ausführungsformen wird das Rauchgas aus dem Rauchgassammelbereich innerhalb des Biomasseofens wieder nach oben geleitet und erst im oberen Bereich des Biomasseofens zu einem Kamin geführt.

In den Ausführungsbeispielen umfasst der Biomasseofen mindestens einen Rauchgaskanal außerhalb des Brennraums, der das durch die Verbrennung der Biomasse im Brennraum entstehende Rauchgas aus einem oberen Bereich des Brennraums ableitet und nach unten in den Rauchgassammelbereich leitet. Durch die Rauchgasführung nach unten kann ein langer Weg für das Rauchgas vorgesehen werden, so dass das Rauchgas ausreichend Zeit hat, Wärme abzugeben.

In Ausführungsformen ist der Rauchgaskanal in einem Bereich des Biomasseofens angeordnet, der zwischen einer Seitenwand des Biomasseofens und dem verjüngten Bereich des Brennraums liegt. Der Rauchgaskanal kann auch teilweise in einen Bereich ragen, in dem der Brennraum seine maximale vordere Breite hat. In Ausführungsformen, in denen sich der Brennraum symmetrisch verjüngt, sind vorzugsweise zwei Rauchgaskanäle ebenfalls symmetrisch zur gleichen Symmetrieebene angeordnet. Auch hier liegen die Rauchgaskanäle in einem Bereich, in dem der Brennraum schmäler ausgestaltet ist.

Das Rauchgas kann aus dem oberen Bereich des Brennraums durch den Rauchgaskanal abgesaugt werden. Hierzu kann der Biomasseofen mit einem Rauchgasventilator ausgestattet sein, der beispielsweise am Boden des Biomasseofens angeordnet sein kann. In der weiteren Beschreibung wird der Rauchgasventilator nicht jedes Mal explizit erwähnt, kann aber immer mit dem Rauchgassammelbereich mitgedacht werden.

Der Rauchgaskanal oder die Rauchgaskanäle können einen beliebigen Querschnitt aufweisen. Erfindungsgemäß ist der Querschnitt des Rauchgaskanals an den durch die Verjüngung des Brennraums zur Verfügung gestellten Raum zwischen Seitenwand und Brennraum angepasst.

In einer Ausführungsform ist der Querschnitt des Rauchgaskanals oder der Rauchgaskanäle im Wesentlichen dreieckförmig. In Ausführungsformen berührt der Rauchgaskanal den Brennraum. Der Rauchgaskanal oder die Rauchgaskanäle können durch eigenständige Rauchgaskanalwände gebildet sein und/oder teilweise oder vollständig durch Bereiche der Wände des Brennraums und/oder der Seitenwand des Ofens gebildet sein.

Bevorzugt ist ein Abstand zwischen Brennraum und Rauchgaskanal. In diesem Abstand können Wärmetauscher angeordnet sein, um eine Abgabe von Wärme des Rauchgases an die Umgebung zu fördern. Entlang der Rauchgaskanäle oder entlang des Rauchgaskanals können Wärmeleitbleche, Rippen oder dergleichen vorgesehen sein, um die Wärmeabstrahlungsfläche zu vergrößern. In einer Ausführungsform kann in dem Abstand zwischen Brennraum und Rauchgaskanal ein wasserführender Wärmetauscher angeordnet sein. In weiteren Ausführungsformen ist es möglich, den Rauchgaskanal mit einem Wasser führenden Wärmetauscher zu umhüllen oder einen wasserführenden Wärmetauscher durch den Rauchgaskanal zu führen.

Bei manchen Ausführungsbeispielen hat der Biomasseofen eine automatische Brennstoffzufuhr. Das ist beispielsweise der Fall bei einem Pelletofen. Die Ofentür, auch Brennraumtür genannt, wird dann beispielsweise nur zum Reinigen oder für die Wartung geöffnet. Bei den Ausführungsbeispielen, bei denen der Biomasseofen als Pelletofen ausgestaltet ist, kann der Pelletofen einen Pelletbehälter umfassen, der direkt in den Biomasseofen integriert sein kann. In Ausführungsbeispielen ist der Rauchgaskanal thermisch von dem Pelletbehälter entkoppelt. Hierdurch wird einer übermäßigen Erhitzung des Brennmittels entgegen gewirkt.

Im Weiteren werden bevorzugte Ausführungsformen anhand der Zeichnung näher erläutert. Die Figuren sind rein schematisch und insbesondere nicht maßstabsgerecht.

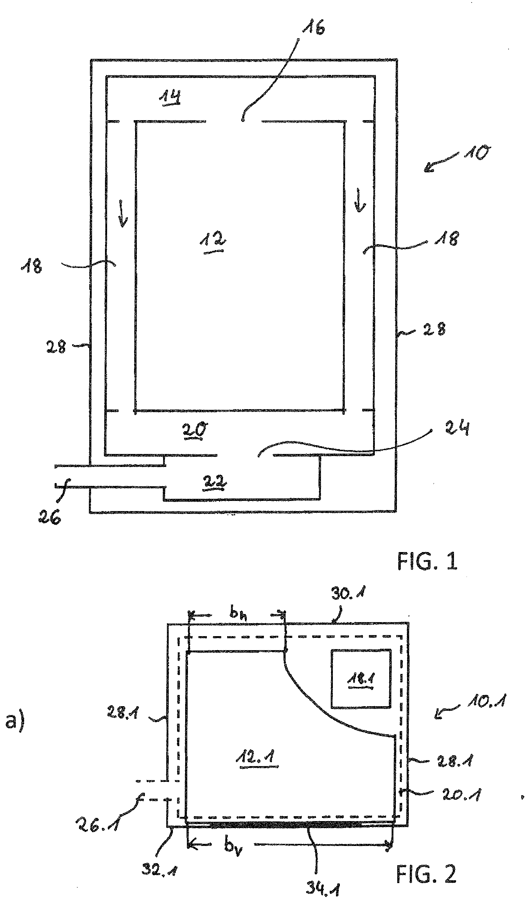

Fig. 1 zeigt schematisch einen senkrechten Querschnitt durch einen Biomasseofen 10 in einem Bereich, in dem der Brennraum schmäler ist. Der Biomasseofen 10 umfasst einen Brennraum 12, eine Rauchgasableitung 14 oberhalb des Brennraums 12, die über eine angedeutete Öffnung 16 mit dem Brennraum 12 verbunden sein kann. Statt einer Öffnung 16 können auch mehrere Öffnungen 16 vorgesehen sein. In der Ausführungsform gemäß

Fig. 1 sind zwei Rauchgaskanäle 18 vorgesehen, die links und rechts des Brennraums 12 angeordnet sind. Die Rauchgaskanäle 18 leiten das Rauchgas in einen Rauchgassammelbereich 20, der unterhalb des Brennraums 12 angeordnet ist. Pfeile deuten die Richtung des Rauchgases an. Ein Rauchgasventilator 22, der mit dem Rauchgassammelbereich 20 über eine angedeutete Öffnung 24 verbunden sein kann, kann das Rauchgas durch die Rauchgaskanäle 18 ansaugen. Der Rauchgasventilator 22 kann mit einem Kaminanschluss 26 verbunden sein, der einen Anschluss an einen Kamin ermöglicht.

Der Biomasseofen 10 weist zwei Seitenwände 28 auf. Die Rauchgaskanäle 18 liegen zwischen dem Brennraum 12 und den Seitenwänden 28. In der schematischen Darstellung der Fig. 1 haben die Rauchgaskanäle 18 eine gemeinsame Wand mit dem Brennraum 12. In anderen Ausführungsformen sind zwei separate Wände, eine Brennraumseitenwand und eine Rauchgaskanalwand vorgesehen, so dass Brennraum und Rauchgaskanal voneinander beabstandet sein können. Damit ist eine bessere Wärmeabgabe vom Rauchgaskanal an die Umgebung möglich.

Figuren 2a-2g zeigen schematische Draufsichten verschiedener Ausführungsformen von Biomasseöfen, bei denen insbesondere der Umriss des Brennraums und Umriss, Anzahl und Anordnung des Rauchgaskanals bzw. der Rauchgaskanäle variieren. Erläuterungen zu einer der Figuren 2a-2g gelten häufig auch für die anderen, erfindungsgemäßen, Ausführungsformen nach Fig. 2a-2f.

Fig. 2a zeigt einen Biomasseofen 10.1 gemäß einer weiteren Ausführungsform. Der Biomasseofen 10.1 umfasst zwei Seitenwände 28.1, die im Wesentlichen parallel zueinander sind. Der Biomasseofen 10.1 umfasst ferner eine Rückwand 30.1, die die beiden Seitenwände 28.1 hinten miteinander verbindet. Der Biomasseofen 10.1 weist eine Vorderfront 32.1 auf, die die beiden Seitenwände 28.1 vorne miteinander verbindet. In der Vorderfront 32.1 kann eine Brennraumtür 34.1 angeordnet sein. Die Brennraumtür 34.1 kann ein Sichtfenster aufweisen. Über die Brennraumtür 34.1 kann der Brennraum mit Brenngut beschickt werden und Reinigungs- und Wartungsarbeiten durchgeführt werden. Der Biomasseofen 10.1 weist einen Brennraum 12.1, einen Rauchgaskanal 18.1 sowie einen Rauchgassammelbereich 20.1 auf. Der Brennraum 12.1 weist in einem vorderen Bereich eine Breite bᵥ auf. Ein zweiter, hinterer Bereich des Brennraums 12.1 ist schmäler und verjüngt sich nach hinten. Im Bereich einer Rückwand des Brennraums 12.1 weist der Brennraum eine Breite bₕ auf, die kleiner ist als die Breite bᵥ. In der Ausführungsform gemäß Fig. 2a verjüngt sich der hintere Bereich asymmetrisch. Eine Seitenwand des hinteren Bereichs hat eine gekrümmte im Wesentlichen konkave Form.

Der Rauchgaskanal 18.1 ist in einem Bereich angeordnet, in dem der Brennraum 12.1 schmäler ist. Der Rauchgaskanal liegt in einem Bereich, der von der Rückwand 30.1, einer der Seitenwände 28.1 und dem konkaven Seitenwandstück des Brennraums 12.1 umschlossen ist. In der in Fig. 2a gezeigten Ausführungsform hat der Rauchgaskanal 18.1 einen annähernd quadratischen Querschnitt. Der Rauchgaskanal 18.1. kann entlang seiner Wände Wärmeleitbleche und ähnliche Wärmetauscher aufweisen, die eine bessere Wärmeabgabe an die Umgebung erlauben. In dem Bereich zwischen konkaver Seitenwand und Rauchgaskanal können auch mit Wasser gefüllte Wärmetauscher angeordnet sein. Der quadratische Querschnitt des Rauchgaskanals 18.1 ist lediglich beispielhaft. Andere Querschnittsformen sind für den Rauchgaskanal 18.1 ebenso möglich. Beispielsweise kann der Rauchgaskanal an die Form der Brennraumseitenwand angepasst sein und so den freien Raum zwischen Brennraum, Rückwand und Seitenwand besser ausnutzen.

Der Rauchgassammelbereich 20.1 ist unter dem Brennraum angeordnet. Ein Umriss des Rauchgassammelbereich 20.1 ist als im Wesentlichen rechteckige Form durch eine gestrichelte Linie angedeutet. Es ist zu verstehen, dass der Rauchgassammelbereich 20.1 auch eine andere Form aufweisen kann. Der Rauchgassammelbereich 20.1 kann eine kleinere Grundfläche als der Brennraum aufweisen. Der Rauchgaskanal 18.1 mündet in den Rauchgassammelbereich 20.1. Der Rauchgassammelbereich 20.1 ist über einen Kaminanschluss 26.1 an einen Kamin anschließbar. Der Kaminanschluss 26.1 ist an einer Seitenwand des Biomassenofens 10.1 dargestellt. Der Kaminanschluss 26.1 kann aber auch im hinteren Bereich des Biomasseofens 10.1 angeordnet sein.

In Fig. 2a und auch in den nachfolgenden Figuren nicht dargestellt ist ein Rauchgasventilator 22, der optional die Rauchgase durch den Rauchgaskanal 18.1 in den Rauchgassammelbereich saugt.

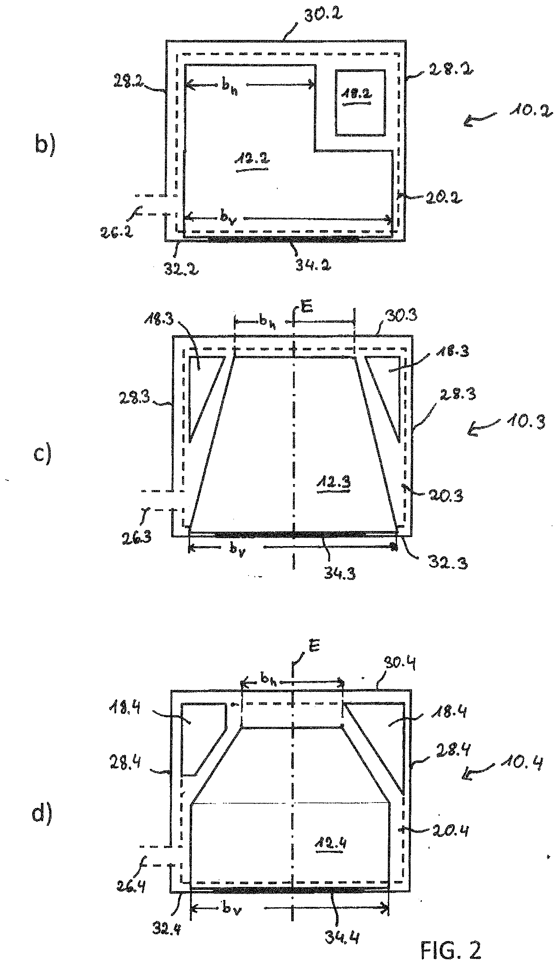

Fig. 2b zeigt als weitere Ausführungsform einen Biomasseofen 10.2. Der Biomasseofen 10.2 umfasst Seitenwände 28.2, eine Rückwand 30.2 sowie eine Vorderfront 32.2 mit eingelassener Brennraumtür 34.2. In dem Biomasseofen 10.2 sind ein Rauchgassammelbereich 20.2, ein Brennraum 12.2 sowie ein Rauchgaskanal 18.2 angeordnet. Von dem Rauchgassammelbereich 20.2 geht ein Kaminanschluss 26.2 ab, der einen Anschluss an einen Kamin ermöglicht. Im Weiteren werden nur Unterschiede zu der vorhergegangenen Ausführungsform näher erläutert.

Der Brennraum 12.2 weist in seinem vorderen Bereich eine konstante Breite bᵥ auf. In seinem hinteren Bereich weist der Brennraum 12.2 eine konstante Breite bₕ auf, die kleiner ist als die Breite bᵥ. Im Gegensatz zum Ausführungsbeispiel gemäß Fig. 2a ändert sich in dem Ausführungsbeispiel gemäß Fig. 2b die Breite des Brennraums 12.2 abrupt. Es gibt keinen kontinuierlichen Übergang zwischen den Breiten. Der Brennraum 12.2 ist wie der Brennraum 12.1 asymmetrisch, das heißt der Brennraum ist nur auf einer Seite, das heißt zu einer Seitenwand 28.2 hin verschmälert.

Der Rauchgaskanal 18.2 ist in dem Bereich angeordnet, in dem der Brennraum 12.2 schmäler ist. Der Rauchgaskanal 18.2 liegt in einem Bereich, der von der Rückwand 30.2, einer der Seitenwände 28.2 und eines Teils der Seitenwände des Brennraums 12.2 in dem Bereich, in dem der Brennraum schmäler ist, begrenzt wird. Der Querschnitt des Rauchgaskanals 18.2 ist rechteckig. Auch hier ist es möglich, dass der Rauchgaskanal einen anderen Querschnitt aufweist. Der Rauchgaskanal 18.2 kann auch in mehrere Rauchgaskanäle, die nebeneinander liegen, unterteilt sein. Das kann vorteilhaft sein, um die Oberfläche des Rauchgaskanals insgesamt zu vergrößern und damit die Wärmeabgabe zu verbessern.

Fig. 2c zeigt als weitere Ausführungsform einen Biomasseofen 10.3. Es werden wiederum im Wesentlichen die Unterschiede zu den vorher gegangenen Ausführungsformen erläutert. Der Biomasseofen 10.3 umfasst zwei Seitenwände 28.3, eine Rückwand 30.3 und eine Vorderfront 32.3 mit einer Brennraumtür 34.3. Ein Rauchgassammelbereich 20.3 ist wieder mit im Wesentlichen rechteckiger Grundform und mit einem Kaminanschluss 26.3 angedeutet.

Der Brennraum 12.3 hat einen trapezförmigen Grundriss mit einer Breite bᵥ im vorderen Bereich und einer Breite bₕ im hinteren Bereich. Die Breite bₕ ist kleiner als die Breite bᵥ. Der Grundriss des Brennraums 12.3 verjüngt sich gleichmäßig nach hinten. Der Brennraum 12.3 ist spiegelsymmetrisch zu einer Ebene E, die vertikal in der Mitte des Brennraumes angeordnet ist. Zwei Rauchgaskanäle 18.3 sind links und rechts in einem Bereich angeordnet, der zwischen dem schmäleren Bereich des Brennraums 12.3 und der Seitenwand 28.3 gebildet ist. Die Rauchgaskanäle 18.3 haben einen im Wesentlichen dreieckförmigen Grundriss, um den Raum zwischen Seitenwand 28.3 und Brennraum 12.3 optimal zu nutzen.

Fig. 2d zeigt einen Biomasseofen 10.4 gemäß einer weiteren Ausführungsform. Der Biomasseofen 10.4 weist Seitenwände 28.4, eine Rückwand 30.4 sowie eine Vorderfront 32.4 mit Brennraumtür 34.4 auf. Ein im Wesentlichen rechteckiger Rauchgassammelbereich 20.4 mit einem Kaminanschluss 26.4 ist angedeutet. Der Biomasseofen 10.4 weist ferner einen Brennraum 12.4 und zwei Rauchgaskanäle 18.4 auf.

Der Brennraum 12.4 weist einen vorderen im Wesentlichen rechteckigen Bereich mit einer Breite bᵥ auf. Der Brennraum 12.4 weist einen hinteren im Wesentlichen trapezförmigen Bereich auf, der an seiner schmalsten Stelle hinten eine Breite bₕ aufweist, die kleiner ist als die Breite bᵥ. Der Brennraum 12.4 ist wie der Brennraum 12.3 spiegelsymmetrisch zu einer Spiegelebene E. In Höhe des schmäleren Bereichs des Brennraums 12.4 sind die Rauchgaskanäle 18.4 links und rechts symmetrisch zur Spiegelebene E angeordnet. In dem in Fig. 2d dargestellten Beispiel ragen die Rauchgaskanäle 18.4 nach hinten über den Brennraum hinaus. Das heißt, sie sind nicht nur in dem Bereich angeordnet, der durch die Verschmälerung des Brennraumes 12.4 zwischen Seitenwand und Brennraum entstanden ist. Die Rauchgaskanäle 18.4 liegen aber teilweise in dem durch die Verjüngung des Brennraums entstandenen freien Bereich. Die Rauchgaskanäle 18.4 haben eine im Wesentlichen dreieckige Form. Der in Fig. 2d links dargestellte Rauchgaskanal ist dabei mit zwei abgeschnittenen Ecken dargestellt, um zu zeigen, dass der Querschnitt der Rauchgaskanäle variieren kann. So können beide Rauchgaskanäle den identischen Querschnitt aufweisen oder wie dargestellt, unterschiedliche Querschnitte. Wie auch in den anderen Ausführungsformen können die Rauchgaskanäle mit Wärmeüberträgern versehen sein.

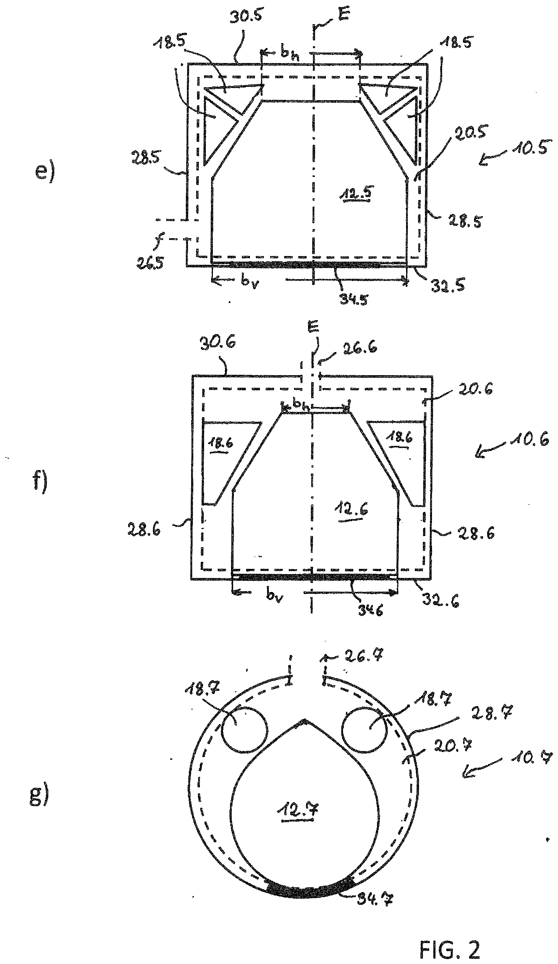

Fig. 2e zeigt einen Biomasseofen 10.5 gemäß einer weiteren Ausführungsform. Der Biomasseofen 10.5 weist Seitenwände 28.5, eine Rückwand 30.5 und eine Vorderfront 32.5 mit einer Brennraumtür 34.5 auf. Ein Rauchgassammelbereich 20.5 mit einem Kaminanschluss 26.5 ist angedeutet.

Der Brennraum 12.5 ist ähnlich wie der Brennraum 12.4 ausgestaltet, spiegelsymmetrisch um eine Spiegelebene E mit einer Breite bᵥ im vorderen Bereich und einer kleineren Breite bₕ im hinteren Bereich. Der vordere Bereich ist wiederum im Wesentlichen rechteckförmig und der hintere Bereich im Wesentlichen trapezförmig. Die Ausgestaltung des Biomasseofens 10.5 unterscheidet sich von der Ausgestaltung des Biomasseofens 10.4 dadurch, dass vier Rauchgaskanäle 18.5 vorgesehen sind. Die rechts und links angeordneten Rauchgaskanäle sind jeweils in zwei Rauchgaskanäle unterteilt. Jeder einzelne der Rauchgaskanäle 18.5 hat einen im Wesentlichen dreieckförmigen Grundriss. Vorteil einer derartigen Unterteilung der Rauchgaskanäle ist die Erhöhung der Oberfläche der Rauchgaskanalwände, die eine bessere Wärmeabgabe ermöglichen.

Fig. 2f zeigt einen Biomasseofen 10.6 gemäß einer weiteren Ausführungsform. Der Biomasseofen 10.6 weist Seitenwände 28.6, eine Rückwand 30.6 und eine Vorderfront 32.6 mit einer Brennraumtür 34.6 auf. Ein Rauchgassammelbereich 20.6 mit einem Kaminanschluss 26.6 ist angedeutet. In der Fig. 2f ist der Kaminanschluss 26.6 in der Rückwand 30.6 gezeigt. Es ist zu verstehen, dass der Kaminanschluss in allen Ausführungsformen auch hinten angeordnet sein kann. In allen Ausführungsformen ist es auch möglich, dass vom Rauchgassammelbereich eine Rauchgasleitung nach oben in den oberen Bereich des Biomasseofens führt und der Kaminanschluss im oberen Bereich des Biomasseofens angeordnet sein kann.

Der Brennraum 12.6 entspricht dem Brennraum 12.5 mit einem vorderen Bereich mit einer konstanten Breite bᵥ und einem hinteren Bereich mit einer schmalsten Breite bₕ und einer im hinteren Bereich im Wesentlichen trapezförmigen Ausgestaltung. Der Brennraum 12.6 ist spiegelsymmetrisch zu einer Spiegelebene E. Zwei Rauchgaskanäle 18.6 sind links und rechts von dem Brennraum 12.6 angeordnet. Die Rauchgaskanäle 18.6 liegen teilweise zwischen einer Seitenwand des Brennraums 12.6 und einer Seitenwand 28.6 des Biomasseofens 10.6 in einem Bereich, in dem der Brennraum 12.6 seine maximale Breite hat. Die Rauchgaskanäle 18.6 liegen zumindest teilweise in dem durch die Verschmälerung des Brennraumes geschaffenem Bereich zwischen Brennraum und Biomasseofenseitenwand. Auch hier ist wiederum eine Unterteilung der Rauchgaskanäle in kleinere Teilkanäle wie in Fig. 2e gezeigt, möglich.

Fig. 2g zeigt einen Biomasseofen 10.7. Der Biomasseofen 10.7 hat einen runden Grundriss. In der Fig. 2g ist der Biomasseofen 10.7 mit einem kreisförmigen Grundriss gezeigt. Der Biomasseofen 10.7 weist eine Außenwand 28.7 mit einer Brennraumtür 34.7 in seinem vorderen Bereich auf. Der Biomasseofen 10.7 umfasst ferner einen Brennraum 12.7 sowie zwei Rauchgaskanäle 18.7. Ein Rauchgassammelbereich 20.7 mit einem Kanalanschluss 26.7 ist im hinteren Bereich angedeutet.

Der Brennraum 12.7 hat ebenfalls eine runde Form, die im Wesentlichen eiförmig ist. Der Brennraum 12.7 verjüngt sich nach hinten im Wesentlichen zu einer Eispitzenform. Die Rauchgaskanäle 18.7 sind links und rechts von der Eispitze zwischen einer Seitenwand des Brennraums 12.7 und der Außenwand 28.7 des Biomasseofens angeordnet. Die Rauchgaskanäle 18.7 liegen damit in einem Bereich, in dem der Brennraum 12.7 schmäler ist.

Der Querschnitt der Rauchgaskanäle 18.7 ist ebenfalls rund. In der Fig. 2g ist er im Wesentlichen kreisförmig. Es ist zu verstehen, dass jede andere Form des Querschnitts möglich ist, beispielsweise eine elliptische Form, die den Raum zwischen dem verjüngten Bereich des Brennraums und der Biomasseofenaußenwand optimal ausnutzt.

Allen erfindungsgemäßen Ausführungsformen ist gemein, dass es die Verjüngung des Brennraums im hinteren Bereich erlaubt, ein oder mehrere Rauchgaskanäle zu platzieren, ohne die äußere Form des Biomasseofens zu verbreitern. Damit wird eine sehr schlanke und kompakte Bauweise des Biomasseofens erreicht. Die Rauchgaskanäle ermöglichen eine gute Wärmeabgabe an die Umgebungsluft. Die Biomasseöfen entsprechend der Erfindung benötigen einen geringen Aufstellplatz.

Wenngleich spezifische Ausführungsformen dargestellt und beschrieben worden sind, versteht der Durchschnittsfachmann, dass eine Vielzahl alternativer und/oder äquivalenter Implementierungen für die gezeigten und beschriebenen spezifischen Ausführungsformen substituiert werden können, ohne von der Erfindung wie in den Ansprüchen definiert, abzuweichen.

## Patentansprüche

1. Biomasseofen (10) mit zwei Seitenwänden (28) des Biomasseofens, umfassend:
einen Brennraum (12), der hinten schmäler ist als vorne;
einen Rauchgassammelbereich (20), der unterhalb des Brennraums angeordnet ist; und
mindestens einen Rauchgaskanal (18) zum Leiten von Rauchgas von einem oberen Bereich des Brennraums nach unten in den Rauchgassammelbereich, **dadurch gekennzeichnet, dass** der mindestens eine Rauchgaskanal zumindest teilweise zwischen einer der Seitenwände und dem Brennraum in dem Bereich angeordnet ist, in dem der Brennraum schmäler ausgestaltet ist und ein Querschnitt des mindestens einen Rauchgaskanals (18) an den durch die Verjüngung des Brennraums (12) zur Verfügung gestellten Raum zwischen der einen Seitenwand und dem Brennraum angepasst ist.

2. Biomasseofen (10) nach Anspruch 1, wobei der Brennraum (12) in einem ersten, vorderen Bereich eine erste konstante Breite (bᵥ) aufweist, und wobei sich der Brennraum in einem zweiten, hinteren Bereich kontinuierlich von vorne nach hinten verjüngt oder alternativ in dem zweiten, hinteren Bereich eine zweite konstante Breite (bₕ) aufweist, die kleiner ist, als die erste konstante Breite.

3. Biomasseofen (10) nach Anspruch 1, wobei sich der Brennraum (12) kontinuierlich von vorne nach hinten verjüngt.

4. Biomasseofen (10) nach einem der vorhergehenden Ansprüche, wobei der Brennraum (12) zu einer vertikalen, mittigen, von vorn nach hinten führenden Ebene (E) spiegelsymmetrisch ist.

5. Biomasseofen (10) nach Anspruch 4, umfassend zu der Ebene symmetrisch angeordnete Rauchgaskanäle (18).

6. Biomasseofen (10) nach einem der vorhergehenden Ansprüche, wobei der Rauchgaskanal oder die Rauchgaskanäle (18) einen im Wesentlichen dreieckförmigen Querschnitt aufweisen.

7. Biomasseofen (10) nach einem der vorhergehenden Ansprüche, wobei der Rauchgaskanal oder die Rauchgaskanäle (18) mit Wärmeüberträgern ausgestattet sind.

8. Biomasseofen (10) nach einem der vorhergehenden Ansprüche, wobei der Rauchgaskanal oder die Rauchgaskanäle (18) von dem Brennraum (12) beabstandet sind.

9. Biomasseofen (10) nach Anspruch 8, wobei in dem Abstand zwischen Rauchgaskanal (18) und Brennraum (12) ein vorzugsweise wassergefüllter Wärmetauscher angeordnet ist.

10. Biomasseofen (10) nach einem der vorhergehenden Ansprüche, wobei ein wassergefüllter Wärmetauscher durch den Rauchgaskanal oder die Rauchgaskanäle (18) geführt ist.

11. Biomasseofen (10) nach einem der vorhergehenden Ansprüche, ferner umfassend einen Kaminanschluss (26), der einen Anschluss des Rauchgassammelbereichs (20) an einen Kamin ermöglicht.

12. Biomasseofen (10) nach Anspruch 11, wobei der Kaminanschluss (26) in einem oberen Bereich des Biomasseofens angeordnet ist, und das Rauchgas innerhalb einer Außenverkleidung des Biomasseofens von dem Rauchgassammelbereich (20) zu dem Kaminanschluss geleitet wird.

## Claims

1. Biomass furnace (10) having two side walls (28) of the biomass furnace, comprising:
a combustion chamber (12) which is narrower at the rear than at the front;
a flue gas collecting region (20) arranged below the combustion chamber; and
at least one flue gas channel (18) for conducting flue gas from an upper region of the combustion chamber downwards into the flue gas collecting region, **characterised in that** the at least one flue gas channel is arranged at least partially between one of the side walls and the combustion chamber in the region, where the combustion chamber is designed in a narrower manner and a cross section of the at least one flue gas channel (18) is adapted to the chamber provided by tapering of the combustion chamber (12) between the one side wall and the combustion chamber.

2. Biomass furnace (10) according to claim 1, wherein the combustion chamber (12) has a first constant width (bᵥ) in a first front region, and wherein the combustion chamber tapers continuously from the front to the rear in a second rear region or alternatively has a second constant width (bₕ) in the second rear region which is smaller than the first constant width.

3. Biomass furnace (10) according to claim 1, wherein the combustion chamber (12) tapers continuously from the front to the rear.

4. Biomass furnace (10) according to any of the preceding claims, wherein the combustion chamber (12) is mirror-symmetrical to a vertical, central plane (E) leading from front to rear.

5. Biomass furnace (10) according to claim 4, comprising flue gas channels (18) arranged in a symmetrical manner to the plane.

6. Biomass furnace (10) according to any of the preceding claims, wherein the flue gas channel or the flue gas channels (18) have a substantially triangular cross section.

7. Biomass furnace (10) according to any of the preceding claims, wherein the flue gas channel or the flue gas channels (18) are equipped with heat exchangers.

8. Biomass furnace (10) according to any of the preceding claims, wherein the flue gas channel or the flue gas channels (18) are spaced apart from the combustion chamber (12).

9. Biomass furnace (10) according to claim 8, wherein a preferably water-filled heat exchanger is arranged in the spacing between the flue gas channel (18) and the combustion chamber (12).

10. Biomass furnace (10) according to any of the preceding claims, wherein a water-filled heat exchanger is guided through the flue gas channel or the flue gas channels (18).

11. Biomass furnace (10) according to any of the preceding claims, further comprising a chimney connection (26) allowing the flue gas collecting region (20) to be connected to a chimney.

12. Biomass furnace (10) according to claim 11, wherein the chimney connection (26) is arranged in an upper region of the biomass furnace, and the flue gas is conducted within an outer casing of the biomass furnace from the flue gas collecting region (20) to the chimney connection.

## Revendications

1. Four à biomasse (10) avec deux parois latérales (28) du four à biomasse, comprenant :
une chambre de combustion (12), qui est plus étroite derrière que devant ;
une zone de collecte de gaz de fumée (20), qui est agencée en dessous de la chambre de combustion ; et
au moins un canal de gaz de fumée (18) pour la conduite de gaz de fumée d'une zone supérieure de la chambre de combustion vers le bas dans la zone de collecte de gaz de fumée, **caractérisé en ce que** l'au moins un canal de gaz de fumée est agencé au moins en partie entre une des parois latérales et la chambre de combustion dans la zone dans laquelle la chambre de combustion est configurée plus étroite et une section transversale de l'au moins un canal de gaz de fumée (18) est adaptée à l'espace mis à disposition par le rétrécissement de la chambre de combustion (12) entre l'une paroi latérale et la chambre de combustion.

2. Four à biomasse (10) selon la revendication 1, dans lequel la chambre de combustion (12) présente dans une première zone avant une première largeur constante (bᵥ), et dans lequel la chambre de combustion se rétrécit en continu de l'avant vers l'arrière dans une deuxième zone arrière ou présente en variante dans la deuxième zone arrière une deuxième largeur constante (bₕ), qui est inférieure à la première largeur constante.

3. Four à biomasse (10) selon la revendication 1, dans lequel la chambre de combustion (12) se rétrécit en continu de l'avant vers l'arrière.

4. Four à biomasse (10) selon l'une quelconque des revendications précédentes, dans lequel la chambre de combustion (12) est à symétrie de miroir par rapport à un plan (E) vertical, central, allant de l'avant vers l'arrière.

5. Four à biomasse (10) selon la revendication 4, comprenant des canaux de gaz de fumée (18) agencés symétriquement au plan.

6. Four à biomasse (10) selon l'une quelconque des revendications précédentes, dans lequel le canal de gaz de fumée ou les canaux de gaz de fumée (18) présentent une section transversale sensiblement triangulaire.

7. Four à biomasse (10) selon l'une quelconque des revendications précédentes, dans lequel le canal de gaz de fumée ou les canaux de gaz de fumée (18) sont équipés d'échangeurs de chaleur.

8. Four à biomasse (10) selon l'une quelconque des revendications précédentes, dans lequel le canal de gaz de fumée ou les canaux de gaz de fumée (18) sont espacés de la chambre de combustion (12).

9. Four à biomasse (10) selon la revendication 8, dans lequel un échangeur thermique de préférence rempli d'eau est agencé dans l'espace entre le canal de gaz de fumée (18) et la chambre de combustion (12).

10. Four à biomasse (10) selon l'une quelconque des revendications précédentes, dans lequel un échangeur thermique rempli d'eau est guidé par le canal de gaz de fumée ou les canaux de gaz de fumée (18).

11. Four à biomasse (10) selon l'une quelconque des revendications précédentes, comprenant en outre un raccord de cheminée (26), qui permet un raccord de la zone de collecte de gaz de fumée (20) à une cheminée.

12. Four à biomasse (10) selon la revendication 11, dans lequel le raccord de cheminée (26) est agencé dans une zone supérieure du four à biomasse, et le gaz de fumée est guidé à l'intérieur d'un revêtement extérieur du four à biomasse de la zone de collecte de gaz de fumée (20) au raccord de cheminée.
